# EUROPEAN PATENT APPLICATION

(11) **EP 2 469 244 A1**
(43) Date of publication of application: **27.06.2012**
(21) Application number: 10809821.1
(22) Date of filing: 26.07.2010
(51) Int. Cl.: G01F 1/58

(54) **ELECTROMAGNETIC FLOW RATE METER FOR CONDUIT PIPE AND METHOD FOR MANUFACTURING SAME**

(30) Priority: 18.08.2009 JP 2009188886
(71) Applicant: Takahata Precision R&D Center Co., Ltd., Yamanashi 4060843 (JP)
(72) Inventor: MORIKITA Nobuo, Yamanashi 4060843 (JP); NISHIURA Masato, Yamanashi 4060843 (JP); MATSUE Tomohiko, Yamanashi 4060843 (JP); KAMIYAMA Tetsuya, Yamanashi 4060843 (JP)
(74) Representative: Schneider, Henry
(86) International application number: PCT/JP2010/062540
(87) International publication number: WO 2011/021476

(57) **Abstract**

The measurement accuracy of an electromagnetic flow rate meter is improved by accurately controlling the height of a step between the inner wall surface of a conduit pipe and the tip surface of each electrode. Also, a high level of liquid-tightness at the boundaries between the conduit pipe and the electrodes is assured to improve the pressure resistance and durability of the electromagnetic flow rate meter. The conduit pipe for an electromagnetic flow rate meter consists of a resin material, and the conduit pipe and electromotive force measuring electrodes are molded integrally. A seal material for sealing between the conduit pipe and the electromotive force measuring electrodes are disposed at the portions in which the electromotive force measuring electrodes are embedded, and this increases the liquid-tightness.

## Description

### TECHNICAL FIELD

The present invention relates to a conduit pipe for electromagnetic flow meter and a method for manufacturing the conduit pipe. In particular, the present invention relates to a conduit pipe for electromagnetic flow meter, comprising a conduit pipe and electrodes for measurement of electromagnetic force, embedded therein, as well as to a method for manufacturing the conduit pipe. The conduit pipe is produced preferably by insert molding.

### BACKGROUND ART

Electromagnetic flow meter is a current meter for measuring the flow rate of a conductive fluid such as potable water or the like. The electromagnetic flow meter is in wide use as a potable water meter or the like.

The electromagnetic flow meter is constituted by a conduit pipe, a pair of electrodes for electromotive force measurement, arranged in the conduit pipe (the electrodes are referred to simply as "electrodes" in some cases), an exciting circuit, and a calculation section and an output section. The electromagnetic flow meter measures the flow velocity of a conductive fluid passing through the conduit pipe constituting the electromagnetic flow meter. The principle of the measurement of flow velocity is as follows.

A pair of electrodes are arranged in a conduit pipe having an inner diameter d, and a magnetic field (magnetic flux density: B) meeting at right angles with the direction of the pair of electrodes, is applied to the inside of the conduit pipe. When, in this state, a conductive fluid is passed through the conduit pipe, an electromotive force Emf is generated between the pair of electrodes. This electromotive force Emf is taken outside via the electrodes and measured by a measurement apparatus. The electromotive force Emf is proportional to each of magnetic flux density B, flow velocity v of conductive fluid and inner diameter d of conduit pipe, and there holds a relationship of
Emf = f (B x v x d) (Faraday' law). Accordingly, the measurement of electromotive force Emf can determine the flow rate of the conductive fluid passing through the conduit pipe of the electromagnetic flow meter.

When the electromagnetic flow meter is used as a potable water meter, there is a case that the pressure of the potable water passing through the conduit pipe reaches maximum 1.4 MPa (about 14 bar). Therefore, the conduit pipe for electromagnetic flow meter, used in potable water meter has been made of a non-magnetic metallic material of high rigidity and high strength. The conduit pipe made of a metallic material is provided, on the inner wall, with a lining made of a non-conductive material such as rubber, fluoroplastic or the like. The electrodes are fitted to the inner wall of the conduit pipe via this lining. The electrodes and the conduit pipe are electrically insulated by the lining. However, when the conduit pipe has a small inner diameter, it is difficult to fit the lining to the inner wall of the conduit pipe, with a uniform height from conduit's inner surface and at a high precision.

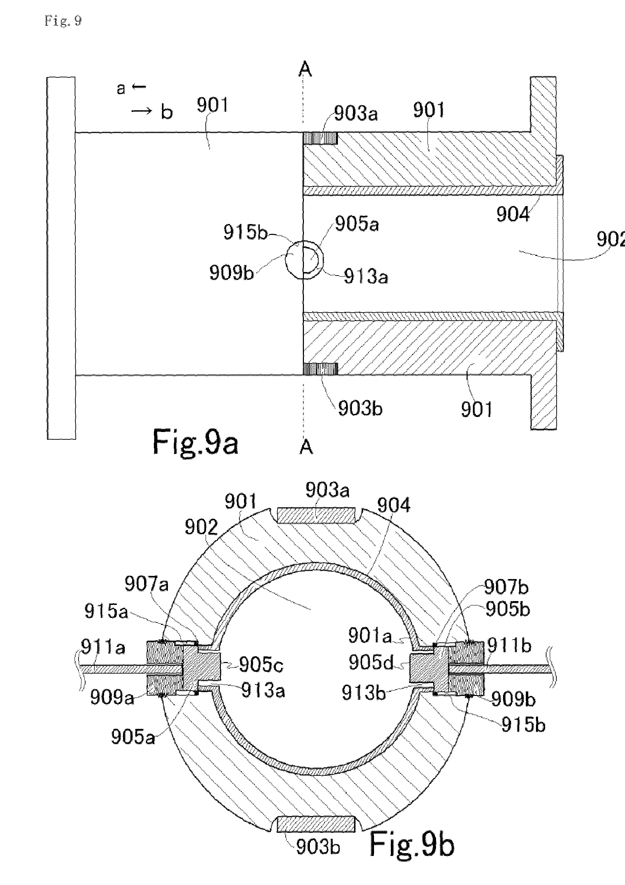

Fig. 9a is a fragmentary sectional view of a conventional electromagnetic flow meter. Fig. 9b is an end view showing the section taken along the A-A line of Fig. 9a. 901 is a conduit pipe and is ordinarily made of a non-magnetic metal material. The conduit pipe 901 has inside a passage 902 extending through the conduit pipe 901. The direction of the passage is an arrow direction a or b in Fig. 9a and, in Fig. 9b, a direction meeting at right angles with the paper surface.

The inner wall of the conduit pipe 901 has a lining 904 made of a non-conductive material such as rubber, fluoroplastic or the like. In the conduit pipe 901 are formed a pair of holes 915a and 915b each for electrode insertion so as to face each other. Each peripheral surface of the holes 915a and 915b for electrode insertion has a lining made of a non-conductive material such as rubber, fluoroplastic or the like.

Into the pair of holes 915a and 915b for electrode insertion are inserted a pair of electrodes 905a and 905b in such a manner that the front end surfaces 905c and 905d of the respective electrodes are exposed to the passage 902. To the rear end sides of the electrodes 905a and 905b are connected respectively lead wires 911a and 911b. The lead wires 911a and 911b are connected to a calculation section not shown.

The conduit pipe 901 is fitted, at the outer wall, with a pair of yokes 903a and 903b in a direction meeting at right angles with a line connecting the pair of electrodes 905a and 905b. The yokes 903a and 903b have each a coil (not shown) wound around the yoke. The coils constitute part of an exciting circuit. A magnetic field is formed in the passage 902 by the yokes 903a and 903b.

When a conductive fluid is passed through the passage 902 in which a magnetic field has been formed, an electromotive force is generated between the pair of electrodes 905a and 905b, proportional to flow velocity of the conductive fluid. The generated electromagnetic force is sent to a calculation section (not shown) via the lead wires 911a and 911b, where the electromagnetic force is measured. From the measured value of electromotive force is calculated the flow velocity of the conductive fluid passing through the passage 902. From the product of the flow velocity and the time used for measurement is calculated the flow rate of the conductive fluid, and it is shown at an output section (not shown).

The fitting of the electrodes 905a and 905b to the conduit pipe 901 is generally conducted by inserting electrodes 905a and 905b fitted with O rings 907a and 907b, into holes 915a and 915b for electrode insertion from outside a conduit pipe 901 and then tightening the electrodes respectively with nuts 909a and 909b.

This fitting of electrodes to electromagnetic flow meter has various problems. In the measurement section of conventional electromagnetic flow meter (Fig. 9b), the electrodes 905a and 905b are fixed to the conduit pipe 901 simply by tightening. In this case, a very small difference in level tends to arise between the inner wall surface 901a of conduit pipe fitted with the lining 904 and the front end surface 905c or 905d of electrode.

Members such as conduit pipe 901, electrodes 905a and 905b, and the like are each produced within a given tolerance. When the tolerance of each member is ± 0.02 mm, there arises a difference in level, of maximum 0.04 mm. The lining 904 applied to the conduit pipe 901 has also a given tolerance with respect to the thickness. As a result, the difference in level may increase further.

Accordingly, the difference in level differs between different electromagnetic flow meters. Further, the difference in level differs between a pair of electrodes 905a and 905b of one electromagnetic flow meter, in many cases.

When the difference in level differs between the pair of electrodes 905a and 905b, the flow of a conductive fluid passing through the passage 902 is disordered at the front end surfaces 905c and 905d of electrodes 905a and 905b. This disorder of flow varies depending upon the flow velocity and the time and is irregular. That is, a laminar flow is generated at a low velocity, a turbulent flow is generated at a high velocity, and an unstable transitional flow is generated at an intermediate velocity thereof. This disorder increases the noise level of the measured value detected by the electrodes 905a and 905b, reducing the measurement accuracy of electromagnetic flow meter.

In the case of an electromagnetic flow meter having a power source outside, it is easy to increase the voltage applied to the yokes 903a and 903b, to increase the electromotive force Emf generated. In this case, the relative intensity of noise to electromotive force Emf can be made low. Meanwhile, in the case of an electromagnetic flow meter having a power source inside (e.g. a battery-driven electromagnetic flow meter capable of operating for at least 10 years), the voltage applied to the yokes 903a and 903b need be low. In this case, the relative intensity of noise to electromotive force Emf is inevitably high. As a result, the measurement accuracy of the electromagnetic flow meter is low.

Further, adjustment of the above-mentioned difference in level in individual electromagnetic flow meters is troublesome and gives rise to an increase in production cost of electromagnetic flow meter. Even if the difference in level has been adjusted, readjustment is necessary when the
electromagnetic flow meter is used over a long period, requiring periodic maintenance.

Furthermore, the diameter of the holes 915a and 915b for electrode insertion is formed so as to be larger by about 0.10 mm than the outer diameter of the electrodes 905a and 905b so as to allow easy insertion of the electrodes 905a and 905b. Consequently, gaps 913a and 913b arise between the holes 915a and 915b for electrode insertion and the electrodes 905a and 905b. The gaps 913a and 913b are not the same among individual electromagnetic flow meters. Air is trapped in the gaps 913a and 913b, causing a reduction in measurement accuracy of electromagnetic flow meter.

The air which has trapped in the gaps 913a and 913b, is pushed into the inside of the gaps 913a and 913b when water is passed through the conduit pipe 901 at a high velocity, or pressure in the conduit pipe 901 is raised. Therefore, the air which has trapped in the gaps 913a and 913b, is difficult to be removed. Air is an electrically non-conductive material. Accordingly, in the electromagnetic flow meter which detects a very weak Emf, the presence of air in the gaps 913a and 913b deteriorates the measurement accuracy significantly.

There is a case that the holes 915a and 915b for electrode insertion are very small (about 5 mm in diameter). Insertion of O rings 907a and 907b and nuts 909a and 909b each of small diameter into very small holes 915a and 915b for electrode insertion needs a high precision technique.

Liquid-tightness is unstable depending upon the smoothness of the surfaces with which the O rings 907a and 907b contact. For the above reason, the surfaces at which the electrodes 905a and 905b or the holes 915a and 915b for electrode insertion contact with the O rings 907a and 907b, need be processed at a high precision.

Moreover, the O rings 907a and 907b, when used for a long period, are deteriorated with the lapse of time. To prevent the deterioration, maintenance is necessary, for example, by periodically changing the O rings 907a and 907b.

Thus, the basic structure of the electromagnetic flow meter requires complexity and high precision, affecting to a rise in production cost and maintenance cost of electromagnetic flow meter. Consequently, it is difficult to spread the electromagnetic flow meter. Hence, there is required an electromagnetic flow meter which gives a high measurement accuracy, can be produced at a low cost, and is low in maintenance cost.

### PRIOR ART LIETRATURES

### Patent Literature

Patent Literature 1: JP-A-1992-295722

### DISCLOSURE OF THE INVENTION

### Task to Be Achieved by the Invention

The first task to be achieved by the present invention is to highly control the difference in level between the inner wall surface of conduit pipe and the front end surface of each electrode and thereby improve the measurement accuracy of the electromagnetic flow meter.

The second task to be achieved by the present invention is to increase the liquid-tightness at the boundary between the conduit pipe and each electrode and thereby improve the pressure resistance and durability of the electromagnetic flow meter.

The present invention provides a conduit pipe for electromagnetic flow meter which has achieved the above task, and a method for manufacturing the conduit pipe.

### Means for Achieving the Task

The present inventors made a study in order to achieve the above task. As a result, it was found that the first task could be achieved by integrally molding a conduit pipe and each electrode by insert molding. It was further found that the second task could be achieved by integrally molding the conduit pipe and each electrode with a seal material being arranged at the boundary between the conduit pipe and each electrode.

The present invention, which has achieved the above task, is as described below.

[1] A conduit pipe for electromagnetic flow meter which comprises
   a resin-made conduit pipe having inside a passage for conductive fluid, and
   a measurement section formed in the intermediate portion of the conduit pipe along the direction of the passage,
   wherein the measurement section has
   a pair of electrodes for electromotive force measurement, which are arranged so as to meet nearly at right angles with the flow direction of the conductive fluid passing through the conduit pipe and which are exposed, at the front end surfaces, to the inner wall surface of the conduit pipe, and
   a pair of conductive members each connected, inside the wall of the conduit pipe, to the rear end side of either of the pair of electrodes for electromotive force measurement,
   wherein the electrodes for electromotive force measurement are molded integrally with the conduit pipe so as to be embedded in the wall of the conduit pipe.

[2] The conduit pipe for electromagnetic flow meter, according to [1], wherein a seal material is provided at the boundary between the conduit pipe and the electrodes for electromotive force measurement embedded in the inner wall of the conduit pipe.

[3] The conduit pipe for electromagnetic flow meter, according to [1], wherein chemical bond is formed between the electrodes for electromotive force measurement and the conduit pipe.

[4] The conduit pipe for electromagnetic flow meter, according to [1], wherein the conduct pipe is made of a fiber-reinforced plastic.

[5] The conduit pipe for electromagnetic flow meter, according to [1], wherein recesses each for fixing a yoke are formed at the periphery of the conduit pipe, in a direction meeting at right angles with the direction in which the pair of electrodes for electromotive force measurement are arranged.

[6] The conduit pipe for electromagnetic flow meter, according to [1], wherein, in each recess for fixing a yoke, a stake to engage with the hole formed in the yoke is formed integrally with the conduit pipe.

[7] A method for manufacturing a conduit pipe for electromotive force measurement set forth in [11, which comprises allowing the front end surface of each electrode for electromotive force measurement to touch with the surface of a slide core arranged in a master mold and then pouring a molten resin into cavity between the master mold and the slide core to integrally mold electrodes and a conduit pipe.

[8] The method for manufacturing a conduit pipe for electromotive force measurement, set forth in [7], wherein each electrode for electromotive force measurement has a seal material on its surface which is to become a boundary with the conduit pipe.

[9] The method for manufacturing a conduit pipe for electromotive force measurement, set forth in [8], wherein the seal material is capable of setting, by heating, a chemical bond between each electrode for electromotive force measurement and the conduit pipe.

### Effect of the Invention

The conduit pipe for electromagnetic flow meter, of the present invention is made of a resin material and accordingly requires no lining treatment. This reduces the production cost of the electromagnetic flow meter.

The conduit pipe for electromagnetic flow meter, of the present invention is molded integrally with the electrodes and accordingly the difference in level between the inner wall surface of the conduit pipe and the front end surface of each electrode can be controlled at a high accuracy. Further, even when the present conduit pipe has been used over a long period, there is no change in the position of each electrode, requiring no maintenance such as the adjustment of electrode position.

The conduit pipe for electromagnetic flow meter, of the present invention, when molded integrally with electrodes each fitted with a seal material, has high liquid-tightness at the boundary between the conduit pipe and each electrode.

### BRIEF DESCRIPTION OF THE DRAWINGS

Fig. 1 is an end view showing an example of the structure of the measurement section of the conduit pipe for electromagnetic flow meter, of the present invention.
Fig. 2 is an end view showing an example of the structure of the measurement section of an electromagnetic flow meter constituted using the conduit pipe for electromagnetic flow meter, of the present invention.
Fig. 3a is a perspective view showing an example of the structure of the conduit pipe for electromagnetic flow meter, of the present invention. Fig. 3b is a perspective view showing an example of the structure of an electromagnetic flow meter constituted using the conduit pipe for electromagnetic flow meter, of the present invention.
Fig. 4a is a sectional view of the electromagnetic flow meter of the present invention and is a sectional view taken along the B-B line of Fig. 1. Fig. 4b is a sectional view of the electromagnetic flow of the present invention and is a sectional view taken along the C-C line of Fig. 1.
Fig. 5 is an end view showing other example of the structure of the measurement section of an electromagnetic flow meter constituted using the conduit pipe for electromagnetic flow meter, of the present invention.
Fig. 6 is a fragmentary sectional view showing an example of an insert mold used when the conduit pipe for electromagnetic flow meter, of the present invention is molded integrally.
Fig. 7 is a fragmentary sectional view showing other example of an insert mold used when the conduit pipe for electromagnetic flow meter, of the present invention is molded integrally.
Figs. 8a and 8b are each a conceptual view showing an example of exciting circuit.
Fig. 9a is a fragmentary sectional view showing the structure of conventional electromagnetic flow meter. Fig. 9b is an end view taken by cutting along the A-A line of Fig. 9a.

### EXPLANATION OF SYMBOLS

101, 501 Each a conduit pipe
101a, 501a Each an inner wall of conduit pipe
101b, 101c Each a stake for yoke fixation
101d, 101e Each a recess for yoke fixation
102, 502 Each a passage
103a, 103b Each a yoke (a member constituting an exciting circuit)
103c, 103d Each a locating hole
104 An inlet of conduit pipe
105a, 105b Each an electrode for electromotive force measurement
105c, 105d Each a front end surface of electrode for electromotive force measurement
106 An outlet of conduit pipe
107a, 107b Each a seal material
108, 508 Each a measurement section
111a, 111b Each a conductive member
112a, 112b Each a lead wire
113a, 113b Each a drawer hole
600 A mold used for molding
601a, 601b Each a core
607 A parting line of slide core
606 A master mold
700 A mold used for molding
701a, 701b Each a core
707 A parting line of core
706 A master mold
708a, 708b Each a recess
800, 850 Each an exciting circuit
802, 852 Each a coil
803c, 803d Each a locating hole
901 A conduit pipe
901a An inner wall of conduit pipe
902 A passage
903a, 903b Each a yoke (a member constituting an exciting circuit)
904 A lining
905a, 905b Each an electrode for electromotive force measurement
905c, 905d Each a front end surface of electrode for electromotive force measurement
907a, 907b Each an O ring
909a, 909b Each a nut
911a, 911b Each a lead wire
913a, 913b Each a gap
915a, 915b Each a hole for electrode insertion

### BEST MODE FOR CARRYING OUT THE INVENTION

Below is described, with reference to Drawings, an embodiment of the electromagnetic flow meter constituted using the conduit pipe for electromagnetic flow meter, of the present invention. This electromagnetic flow meter is usable suitably as potable water meter. Incidentally, in the present invention, "meeting at right angles" is most preferably a case of meeting at an angle of 90° but includes a case of meeting at an angle of 80 to 100° (meeting nearly at right angles).

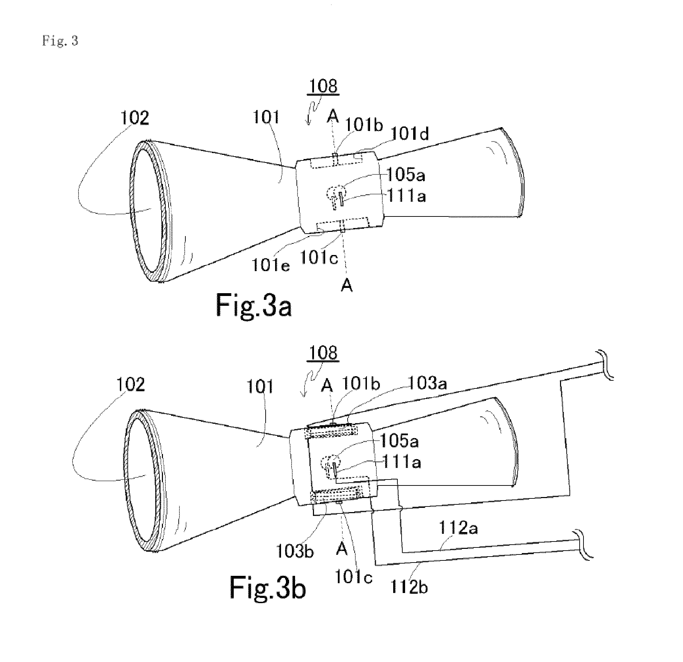

Fig. 3a is a perspective view showing an example of the conduit pipe for electromagnetic flow meter, of the present invention. Fig. 3b is a perspective view showing an example of an electromagnetic flow meter constituted using the conduit pipe for electromagnetic flow meter, of the present invention. In Fig. 3a, 101 is a conduit pipe. This conduit pipe 101 is formed so that the pipe diameter becomes gradually smaller from the both ends of pipe toward the center of pipe. In the cylindrical conduit pipe 101 is formed a passage 102 through which a conductive fluid can pass. In the central portion of the conduit pipe 101 in the passage direction where the pipe diameter is smallest, a measurement section 108 for measurement of the flow velocity of conductive fluid is formed.

In the measurement section 108, a pair of cylindrical electrodes 105a and 105b are provided. The pair of electrodes 105a and 105b are embedded in the wall of conduit pipe with the front end surfaces being exposed at the inner wall surface of the conduit pipe 101. To each rear end side of the pair of embedded electrodes 105a and 105b is connected each one end of conductive members 111a and 111b, and the each other end of the conductive members is withdrawn outside from the outer wall of the drawer holes 113a and 113b formed in the conduit pipe 101.

101d and 101e are recess for fixation of a pair of yokes, formed at the periphery of the conduit pipe 101. The direction of the straight line connecting the recess 101d and 101e for fixation of a pair of yokes meets at right angles with the direction of the straight line connecting the pair of electrodes 105a and 105b.

101b and 101c are each a resin-made stake formed at the periphery of the conduit pipe 101, integrally with the conduit pipe 101, and are used for fixation of yokes 103a and 103b described later.

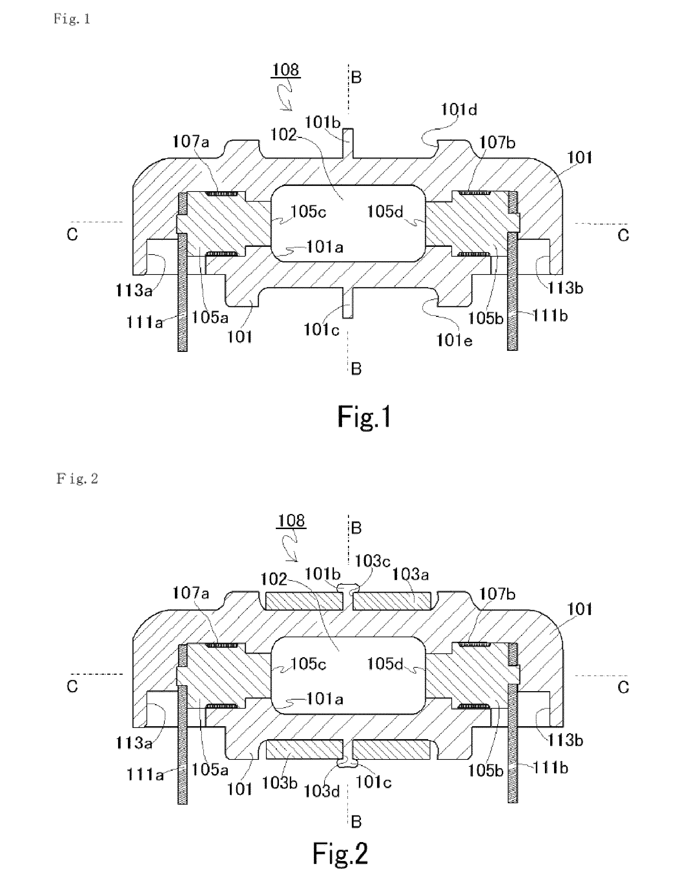

In Fig. 3b, 103a and 103b is a pair of flat plate-shaped yokes. On the periphery of each yoke is wound a lead wire in the thickness direction of the yoke, for formation of a coil; and the coil constitutes part of an exciting circuit (not shown). As shown in Fig. 2, locating holes 103c and 103d are formed in the center of the yokes 103a and 103b in the thickness direction of the yokes. The locating holes 103c and 103d and the stakes 101a and 101b engage with each other. Thereby, the yokes 103a and 103b are arranged at the predetermined positions of the conduit pipe 101 accurately. The stakes 101c and 101d engaged with the yokes 103a and 103b are caulked by a heat at the respective front ends, and the yokes 103a and 103b are fixed to the periphery of the conduit pipe 101.

As shown in Fig. 3, to the conductive members 111a and 111b withdrawn outside the conduit pipe 101 are respectively connected one ends of lead wires 112a and 112b. Other ends of the lead wires 112a and 112b are connected to a calculation section (not shown).

The yokes 103a and 103b form a magnetic field in the passage 102 of the conduit pipe 101. When a conductive fluid passes through the passage 102 in which a magnetic field has been formed, an electromotive force is generated between the pair of electrodes 105a and 105b, proportional to the flow velocity of the conductive fluid.

The electromotive force generated between the electrodes 105a and 105b is sent to a calculation section (not shown) via the conductive members 111a and 111b and the lead wires 112a and 112b, where the electromotive force is measured. In the calculation section, the flow velocity of the conductive fluid passing through the passage 102 is calculated from the measured electromotive force. The flow rate of the conductive fluid is calculated from the flow velocity and the time taken for measurement and is sent to an output section (not shown).

The end face obtained by cutting at the A-A line of Fig. 3a is shown in Fig. 1.

Fig. 1 is an end view showing an example of the structure of the measurement section of the conduit pipe for electromagnetic flow meter, of the present invention. In Fig. 1, 101 is a conduit pipe and, in the inner wall of the conduit pipe 101, there are embedded a pair of electrodes 105a and 105b and conductive members 111a and 111b, by integral molding. The front end surfaces 105c and 105d of the electrodes 105a and 105b are exposed at the same surface as the inner wall surface of the conduit pipe 101. That is, the front end surfaces 105c and 105d neither project nor sink from the inner wall surface of the conduit pipe 101, and exactly agree with the inner wall surface.

The rear ends of the electrodes 105a and 105b are covered with the resin constituting the conduit pipe 101 and are fixed inside the conduit pipe 101, and are unable to move to the axial direction of the electrodes. Since the conduit pipe 101 and the electrodes 105a and 105b are molded integrally, there is substantially no gap between the conduit pipe 101 and the electrodes 105a and 105b.

In Fig. 1, the section of the passage, meeting at right angles with the passage direction of the measurement section 108 is formed in a rectangular shape. On the outer wall surface of the conduit pipe 101 are arranged a pair of yokes 103a and 103b along the linear direction meeting nearly at right angles with the linear direction connecting the pair of electrodes 105a and 105b. That is, the direction in which the conductive fluid passes in the conduit pipe, the direction in which the pair of electrodes are arranged, and the direction in which the pair of yokes are arranged, are designed so as to meet nearly at right angles with each other.

As described later, the conduit pipe of electromagnetic flow meter, of the present invention and the electrodes are molded integrally using a resin material. By appropriately selecting the shapes of the mold parts for passage formation, it is possible to give rise to no difference in level between the inner wall surface 101a of conduit pipe and the front end surfaces 105c and 105d of electrodes, or to intentionally give rise to a given difference in level.

107a and 107b are seal materials arranged at boundaries between the conduit pipe 101 and the electrodes 105a and 105b. The seal materials 107a and 107b are arranged respectively along the peripheries of the electrodes 105a and 105b. The seal materials 107a and 107b are arranged in order to enhance the liquid-tightness at each boundary.

A seal material (not shown) may be filled in the drawer holes 113a and 113b, in order to further enhance the liquid-tightness of conduit pipe 101.

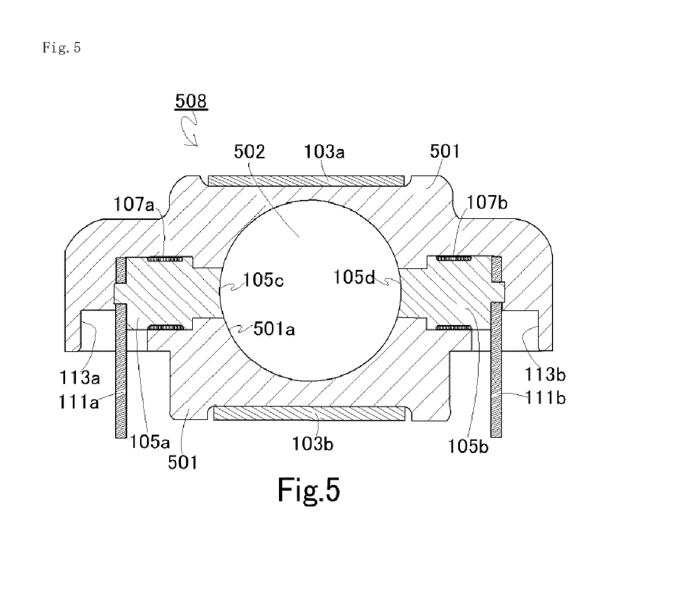

Fig. 5 is an end view showing other structure of the measurement section of the conduit pipe for electromagnetic flow meter, of the present invention. In this conduit pipe for electromagnetic flow meter, the passage 502 of the measurement section 508 is formed so as to have a circular section. In this case, the shapes of the front end surfaces 105c and 105d of the electrodes 105a and 105b may be a convex lens shape or a planar shape. Other structures are the same as in Fig. 1 and, accordingly, descriptions thereof are not made.

### <Conduit pipe>

The conduit pipe 101 is constituted by a thermoplastic resin material. This resin material is preferably high in tensile strength, bending strength, rigidity, impact resistance, hydrolysis resistance and resistance to solvent cracking. Suitable are, for example, engineering plastics reinforced with a glass fiber (GF) or a carbon fiber, such as PC (polycarbonate resin)-GF, PA (polyamide resin)-GF, PPS (polyphenylene sulfide resin)-GF and the like. Incidentally, the outer surface of the conduit pipe 101 may be reinforced with a non-magnetic metallic material.

Preferably, in the conduit pipe for electromagnetic flow meter, of the present invention, the passage of the measurement section has a rectangular section and yokes are formed in parallel to the long side of the rectangle. That is, it is preferred that the direction of applying a magnetic field is identical to the direction in which the passage is narrow. The reason is that a magnetic field can be efficiently applied to a conductive fluid using a small exciting current.

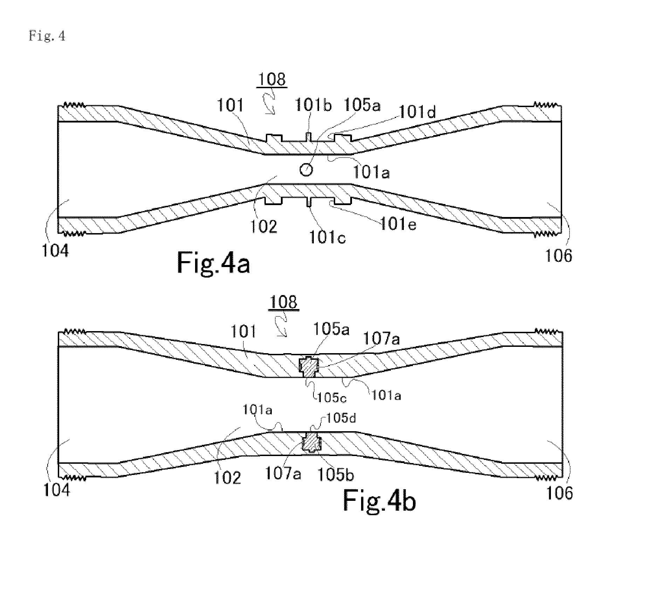

Preferably, in the conduit pipe for electromagnetic flow meter, of the present invention, the section of the passage is formed so as to gradually decrease from the inlet and outlet of conductive fluid toward the measurement section. Fig. 4a is a sectional view of the conduit pipe for electromagnetic flow meter, of the present invention, taken along the B-B line of Fig. 1. Fig. 4b is a sectional view of the conduit pipe for electromagnetic flow meter, of the present invention, taken along the C-C line of Fig. 1. 101 is a conduit pipe, wherein the section of the passage decreases gradually from the inlet 104 and outlet 106 of conductive fluid toward the measurement section 108. The flow velocity of the conductive fluid is accelerated as the conductive fluid approaches the measurement section 108, whereby a large electromotive force is generated. Accordingly, this conduit pipe enables accurate measurement as compared with a conduit pipe in which the passage area of measurement section is the same as the passage area of passage inlet or outlet. Further, even with a small exciting current, the present conduit pipe enables accurate measurement as compared with the above-mentioned conduit pipe. The ratio of the passage sectional area of the measurement section 108 relative to that of the inlet 104 or outlet 106 is preferably about 30 to 10% based on the passage sectional area of the inlet 104 or outlet 106.

### <Electrode for measurement of electromotive force>

As the electrodes 105a and 105b, there can be used known electrodes made of an anti-corrosive metal material such as stainless steel, Hastelloy, titanium, nickel or the like. There may be used composite electrodes comprising a plurality of materials.

### <Seal material>

Preferably, seal materials 107a and 107b are arranged at the boundaries between the conduit pipe 101 and the electrodes 105a and 105b, for higher liquid-tightness (Fig. 1). As the seal materials 107a and 107b, there are mentioned, for example, an O ring and a sleeve made of an elastic material. As the O ring and sleeve, there can be used a known seal material made of an isoprene rubber, Teflon (registered trademark), a silicone rubber, an ethylene propylene rubber (EPDM), NBR or the like.

These seal materials 107a and 107b are engaged with the peripheries of the electrodes 105a and 105b (the surfaces of the electrodes 105a and 105b which are to become the boundaries between the electrodes 105a and 105b and the conduit pipe 101). These seal materials 107a and 107b have higher elasticity than the resin constituting the conduit pipe 101. Consequently, they strongly seal the boundaries between the electrodes 105a and 105b and the conduit pipe 101.

The seal materials 107a and 107b may also be produced using a paste material (in which a polymer material such as polyurethane, synthetic rubber or the like is dissolved in a solvent) (hereinafter, this paste material is referred to simply as "paste material", in some cases). As particularly preferred paste materials, there can be mentioned those obtained by dissolving a polymer material such as crosslinking polyurethane, synthetic rubber or the like in an organic solvent such as toluene, xylene or the like and adding thereto a fine particle filler such as talc, mica or the like. Specifically explaining, there can be used a paste material comprising 20 to 30 mass % of a synthetic rubber, 10 to 20 mass % of talc, 20 to 30 mass % of methyl ethyl ketone, 12 mass % of toluene, 12 mass % of xylene and 1 to 10 mass % of ethyl acetate. By coating this paste material on the peripheries of the electrodes 105a and 105b, followed by drying (the solvent evaporates), a film of a polymer material is formed on the peripheries of the electrodes 105a and 105b. When this film is heated at about 150°C, the polymer material gives rive to a crosslinking reaction. As a result, a heat-resistant seal material is formed on the peripheries of the electrodes 105a and 105b. When a conduit pipe 101 is formed by insert molding, the seal materials 107a and 107b formed on the electrodes 105a and 105b contact with a molten resin (a resin for forming the conduit pipe 101), whereby fusion-bonding takes place between the seal materials 107a and 107b and the resin. As a result, the liquid-tightness between the conduit pipe 101 and the electrodes 105a and 105b becomes higher.

As the seal materials 107a and 107b, there is used particularly preferably a seal material capable of forming chemical bonding between the peripheries of electrodes 105a and 105b and the conduit pipe 101. Specifically explaining, first, the electrodes are cleaned and a thin film of molecular size thickness is formed thereon. This thin film gives rise to a chemical reaction owing to the heat of a molten resin (a material for molding a conduit pipe 101). As a result, chemical bonding takes place between the thin film and the peripheral metal of electrodes 105a and 105b and between the thin film and the conduit pipe 101. When the molten resin has been cooled, the reaction terminates and strong chemical bond is formed. This chemical bond is strong, does not peel off during the cooling step, and promises a stable mechanical strength. Thereby, the conduit pipe 101 and the electrodes 105a and 105b are strongly bonded with each other. As a result, the liquid-tightness between the conduit pipe 101 and the electrodes 105a and 105b becomes much stronger. Such a seal material is high in adhesion strength, liquid-tightness and durability, as compared with the case of using the above-mentioned O ring or the like, and is suitable for use in products (e.g. potable water meter) used over a long period.

### <Conductive member>

As the conductive members 111a and 111b, a known conductive member can be used. There can be mentioned, for example, a sheet material or a linear material, both made of copper, platinum, gold, platinum or an alloy thereof. The conductive members 111a and 111b are connected to the rear ends of the electrodes 105a and 105b by mechanical caulking, soldering or the like.

### <Lead wire>

As the lead wires 112a and 112b, a known lead wire can be used. There can be mentioned, for example, a coated copper wire and a flexible circuit board on which a conductive circuit has been printed.

### <Stake for yoke fixation>

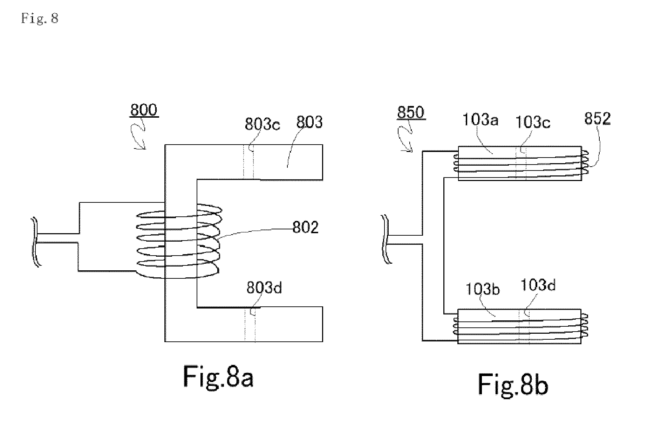

A pair of yokes 103a and 103b form a magnetic field in the passage of the conduit pipe. The pair of yokes 103a and 103b facing each other are arranged so as to meet nearly at right angles with the direction in which the pair of electrodes 105a and 105b for electromotive force measurement face each other and the direction in which a conductive fluid flows in the conduit pipe. A coil is formed around the yokes constitutes part of an exciting circuit. The number of the coil formed may be one or more than one. The pair of yokes may be formed integrally as a yoke 803 of U-shaped type, as shown in Fig. 8a, or may be formed as two separated yokes 103a and 103b, as shown in Fig. 8b.

As shown in Fig. 1, the magnetic flux of the passage 102 changes proportional to the distance between the pair of yokes 103a and 103b. When an intended specific distance is not obtained between the pair of yokes 103a and 103b of the electromagnetic flow meter, calibration need be made for individual electromagnetic flow meters, which is troublesome.

In the conduit pipe for electromagnetic flow meter, of the present invention, stakes 101b and 101c for fixing the yokes 103a and 103b are preferably formed at the periphery of the conduit pipe 101. These stakes 101b and 101c are engaged with the locating holes 103c and 103d (Fig. 2) formed in the yokes 103a and 103b. Thereby, the yokes 103a and 103b are fixed at intended positions of the conduit pipe 101, whereby the distance between the pair of yokes 103a and 103b can be set at a given level as intended. Incidentally, the stakes 101c and 103d, after the yokes 103a and 103b have been fixed, are caulked at the front ends by a heat, whereby the yokes 103a and 103b can be fixed to the conduit pipe 101 (see 101b and 101c of Fig. 2).

Incidentally, the fixation of yokes 103a and 103b may be made with an adhesive or bolts, besides the above-mentioned method.

### <Integral molding>

The conduit pipe for electromagnetic flow meter, of the present invention is molded integrally and has a structure in which the electrodes 105a and 105b are embedded in the conduit pipe 101. Such integral molding is conducted as follows, for example.

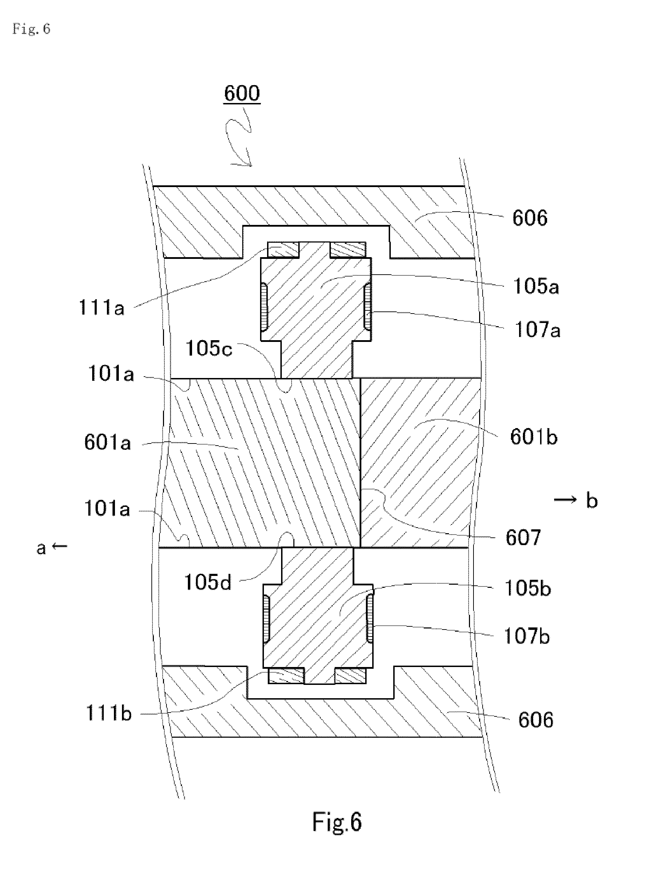

Fig. 6 is a sectional fragmentary view of a mold 600 which is used when the conduit pipe 101 and the electrodes 105a and 105b, shown in Fig.1 are molded integrally. Pair of electrodes 105a and 105b are arranged at the both sides of cores 601a and 601b so as to face each other, in a state that the front end surfaces 105c and 105d of the electrodes touch with the cores 601a and 601b.

The cores are separable at the parting line 607 so that the cores 601a and 601b can be removed easily after molding.

Prior to the integral molding, seal materials 107a and 107b are preferably formed on the periphery of the electrodes 105a and 105b.

The electrodes 105a and 105b and the cores 601a and 601b are arranged inside the cavity of a master mold 606, and the master mold 606 is closed. A molten resin is injected into the cavity of the master mold 606. After cooling, the cores 601a and 601b and the master mold 606 are removed to obtain a conduit pipe 101 in which the electrode 105a and 105b are embedded. Incidentally, the cores 601a and 601b can be removed by moving them respectively into arrow directions a and b. The cores 601a and 601b form a passage 102 through which a conductive fluid can pass.

In the above-mentioned integral molding, the front end surfaces 105c and 105d of the electrodes 105a and 105b and the inner wall surface 101a of the conduit pipe can be allowed to be the same surface at an extremely high accuracy (Fig. 1). In this molding method, the front ends surfaces 105c and 105d of the electrodes 105a and 105b are forced against the surfaces of the cores 601a and 601b by the pressure of the resin in the mold. Thereby, there is no difference in level between the front ends surfaces 105c and 105d of the electrodes 105a and 105b and the inner wall surface 101a of the conduit pipe, even though the sizes of the electrodes 105a and 105b are not uniform.

In the above, description has been made on the case in which no difference in level is allowed between the front ends surfaces 105c and 105d of the electrodes 105a and 105b and the inner wall surface 101a of the conduit pipe.
However, it is possible to intentionally give rise to a given difference in level between them. In some cases, it is preferred to give rise to a given difference in level between them, depending upon the kind and surface roughness of electrodes, the flow velocity range used, etc. That is, there is a case that the fluid present in the vicinity of the front end surfaces 105c and 105d of the electrodes 105a and 105b is always washed away forcibly and, as a result, the electromotive force measured has a high stability. The difference in level allowed to be present between the front ends surfaces 105c and 105d of the electrodes 105a and 105b and the inner wall surface 101a of the conduit pipe can be changed freely depending upon the shape of the core used in molding.

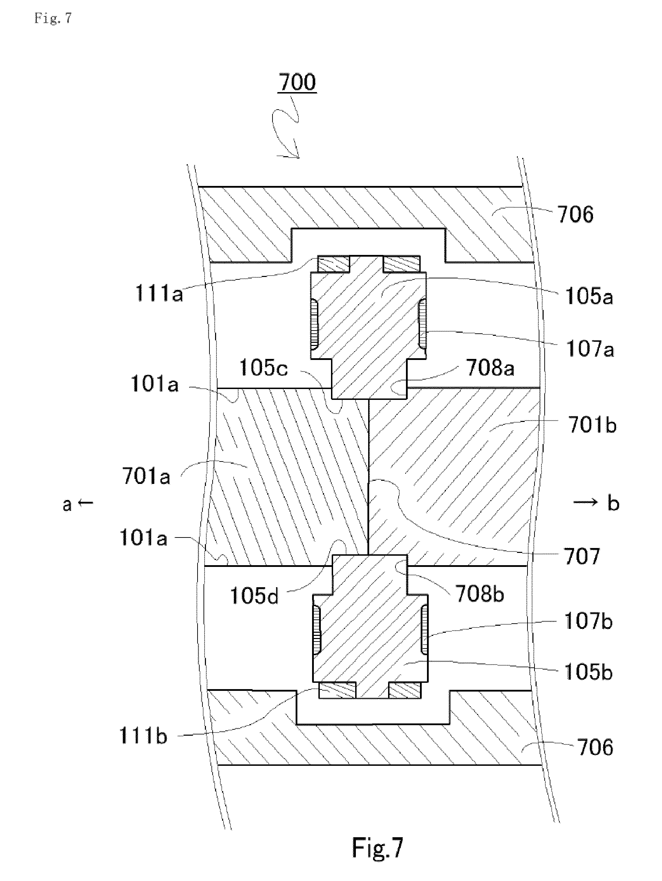

Fig. 7 is a sectional fragmentary view of a mold 700 which is used when a given difference in level is allowed to arise between the front ends surfaces 105c and 105d of the electrodes 105a and 105b and the inner wall surface 101a of the conduit pipe. Recesses 708a and 708b are formed in cores 701a and 701b. The depth of the recesses 708a and 708b is the same as the difference in level allowed to arise between the front ends surfaces 105c and 105d of electrodes 105a and 105b and the inner wall surface 101a of the conduit pipe.

Thus, according to the present method for manufacturing a conduit pipe for electromagnetic flow meter, it is possible to give rise to no difference in level between the front ends surfaces 105c and 105d of the electrodes 105a and 105b and the inner wall surface 101a of the conduit pipe, or to accurately give rise to a given difference in level.

## Claims

1. A conduit pipe for electromagnetic flow meter which comprises
a resin-made conduit pipe having inside a passage for conductive fluid, and
a measurement section formed in the intermediate portion of the conduit pipe along the direction of the passage, wherein the measurement section has
a pair of electrodes for electromotive force measurement, which are arranged so as to meet nearly at right angles with the flow direction of the conductive fluid passing through the conduit pipe and which are exposed, at the front end surfaces, to the inner wall surface of the conduit pipe, and
a pair of conductive members each connected, inside the wall of the conduit pipe, to the rear end side of either of the pair of electrodes for electromotive force measurement, wherein the electrodes for electromotive force measurement are molded integrally with the conduit pipe so as to be embedded in the wall of the conduit pipe.

2. The conduit pipe for electromagnetic flow meter, according to [1], wherein a seal material is provided at the boundary between the conduit pipe and the electrodes for electromotive force measurement embedded in the inner wall of the conduit pipe.

3. The conduit pipe for electromagnetic flow meter, according to [1], wherein chemical bond is formed between the electrodes for electromotive force measurement and the conduit pipe.

4. The conduit pipe for electromagnetic flow meter, according to [1], wherein the conduct pipe is made of a fiber-reinforced plastic.

5. The conduit pipe for electromagnetic flow meter, according to [1], wherein recesses each for fixing a yoke are formed at the periphery of the conduit pipe, in a direction meeting at right angles with the direction in which the pair of electrodes for electromotive force measurement are arranged.

6. The conduit pipe for electromagnetic flow meter, according to [1], wherein, in each recess for fixing a yoke, a stake to engage with the hole formed in the yoke is formed integrally with the conduit pipe.

7. A method for manufacturing a conduit pipe for electromotive force measurement set forth in [1], which comprises allowing the front end surface of each electrode for electromotive force measurement to touch with the surface of a slide core arranged in a master mold and then pouring a molten resin into cavity between the master mold and the slide core to integrally mold electrodes and a conduit pipe.

8. The method for manufacturing a conduit pipe for electromotive force measurement, set forth in [7], wherein each electrode for electromotive force measurement has a seal material on its surface which is to become a boundary with the conduit pipe.

9. The method for manufacturing a conduit pipe for electromotive force measurement, set forth in [8], wherein the seal material is capable of setting, by heating, a chemical bond between each electrode for electromotive force measurement and the conduit pipe.
